# EUROPEAN PATENT APPLICATION

(11) **EP 0 810 780 A1**
(43) Date of publication of application: **03.12.1997**
(21) Application number: 97500096.9
(22) Date of filing: 27.05.1997
(51) Int. Cl.: H04N 5/262, G09F 19/00

(54) **Method for the remote visualization of advertising panels from an image-capturing camera**

(30) Priority: 30.05.1996 ES 9601191
(71) Applicant: Market SP'94, S.L., 08006 Barcelona (ES)
(72) Inventor: Gros, Sergi, Mr., Barcelona (ES)
(74) Representative: Duran Moya, Luis-Alfonso

(57) **Abstract**

Method for the remote visualization of advertising panels and the like from an image-capturing camera. The method is characterized by the measuring of the angle which the plane receiving the advertising panel (17) forms with the optical axis (19) of the eyepiece of the image-capturing camera in the focused position of the panel, plotting the individual segments of the advertising panel according to the angular transformation resulting from projecting the advertising panel onto a plane perpendicular (18) to a selected axis, which may be the optical axis of the lens of the camera. It makes it possible to observe the advertising poster correctly from any point.

## Description

The present invention relates to a method for the visualization of advertising panels and the like from considerable distances, from an image-capturing camera, preferably a television camera.

The use of advertising panels fixed in areas where large numbers of the public gather is a classic method of static advertising which allows, for example, the transmission of the images captured to the viewers, which can represent a consequent advertising effect.

It is customary to use the system of fixed advertising panels combined with television projector cameras and the like at sports grounds, for example, football grounds or other places where the high concentration of spectators justifies the application of this system of advertising.

However, the arrangement of fixed advertising panels, although it allows the greatest economy of the support for the advertisement, has a drawback with regard to its visualization from television cameras which are situated in fixed and predetermined locations at the sports ground or other similar place. The drawback consists fundamentally in that the angle of the optical axis of the lens of the camera with respect to the plane of the fixed panel is variable according to the position of the said panel at the ground. Thus, for example, if the television camera is installed at one side, the angle at which an advertising panel arranged exactly on the opposite side of the ground, or a fixed advertising panel arranged for example behind a goal, is seen, is very different, since the image captured by the optical system, which is that transmitted by the television system, may vary considerably from cases in which the view is practically perfect to cases in which, given the very unfavourable angle between the optical axis of the lens of the camera and the advertising panel, the image captured by the camera may end up by being practically unrecognizable, thus reducing to a great extent the desired advertising effect.

The method which is the subject of the present invention is intended to remedy the drawbacks mentioned, being based on the fact that, according to the spatial arrangement between the image-capturing camera and the advertising panel, a correction is made in the plotting of the advertising subject on the panel which counteracts the angular deformation previously mentioned, so that the spectator can perceive the advertising subject in its correct form.

In order to achieve these objectives, the method which is the subject of the present invention is based fundamentally on measuring the angle between the optical axis of the lens of the camera and the plane constituting the advertising panel, transforming the plotting of the advertising subject according to the angle formed between the actual panel and one perpendicular to a selected axis, which may be the optical axis. In this way, the image captured by the camera will be corrected automatically, so that the spectators can see the advertising subject without any noticeable deformation. In order to implement the present method, it will be necessary, therefore, to determine a priori the relative positions of the advertising panel and the camera lens, which will involve no difficulty, since the position of the image-capturing camera is well known, so that, depending on the precise position of the advertising panel at the sports ground or other similar place, the said measuring and transformation of the plotting of the advertising subject can be carried out.

Since the location of the advertising panel may in principle be any flat surface situated within the sports ground or the like, the corrections to be made in principle may amount to three angles in space, that is to say, the angles corresponding to the three coordinate axes x, y, z. However, in more simplified versions, the correction may be made at two angles in accordance with two of the coordinate axes or simply with respect to one angle, such as the angle which the panel forms with respect to the vertical, that is to say, correction simply with respect to the z axis.

In a specific embodiment of the method which is the subject of the present invention, after determining the correction angles, a normal advertising panel is produced which will afterwards be projected according to the selected correction angles, that is to say, according to one, two or three coordinate axes, determining the corresponding dimensions for each of the individual segments of the advertising panel. In accordance with the length and resulting orientation in the spatial projection, each one of the segments of the actual advertising subject will be plotted which will correspond to a representation deformed in close view but not from the taking angle of the television camera, which will be a correct view.

As will be understood, the method is easily computerized, so that starting from the coordinates in a plane of the master advertising subject, the coordinates of each of the corresponding points can be determined in accordance with the desired angle corrections. This computerization will be much simpler in the case where the correction is made according to only one angle, or optionally, according to two angles. Likewise, the computerization can be effected by tabulation of data, so that simply by introducing the angles and the dimensions, reference values are obtained.

The application of the method which is the subject of the present invention will make it possible not only to achieve perfect visualization of the advertising subject from a wide range of viewing angles, but in addition will allow fuller utilization of the advertising spaces at the sports ground or the like and a greater exploitation thereof owing to the improvement achieved in visualising the advertisements.

For greater understanding explanatory drawings are provided, by way of example, of the method which is the subject of the present invention.

Figures 1 and 2 show diagrammatically the arrangement of an advertising panel forming a certain angle with respect to the horizontal and an approximate representation of the visual effect thereof.

Figures 3 and 4 are figures similar to figures 1 and 2, showing the arrangement of an advertising panel at a different angle.

Figure 5 shows diagrammatically the general arrangement of an advertising panel at a sports ground in relation to the image-capturing camera.

Figure 6 shows a detail of the angular arrangement of the advertising panel with respect to the camera in the case where the panel forms an angle of 45° with respect to the horizontal.

Figure 7 shows a figure similar to Figure 6 in the case where the advertising panel is arranged on the ground, that is to say, on a horizontal plane.

Figures 8 and 9 are figures showing the correction of an advertising panel in accordance with the present invention.

As shown in the figures, in the case where an advertising panel 1 is arranged on a surface 2 which forms an angle with the horizontal 3, for example of 30°, the outermost radii of sight from a camera which is not shown being 4 and 5, the advertising panel is observed in the camera image in a deformed view in which, if there is only an angle of 30° with respect to the axis of the camera, the horizontal sections 6 will be seen in their true dimension, while the vertical sections 7 will be seen in much reduced length.

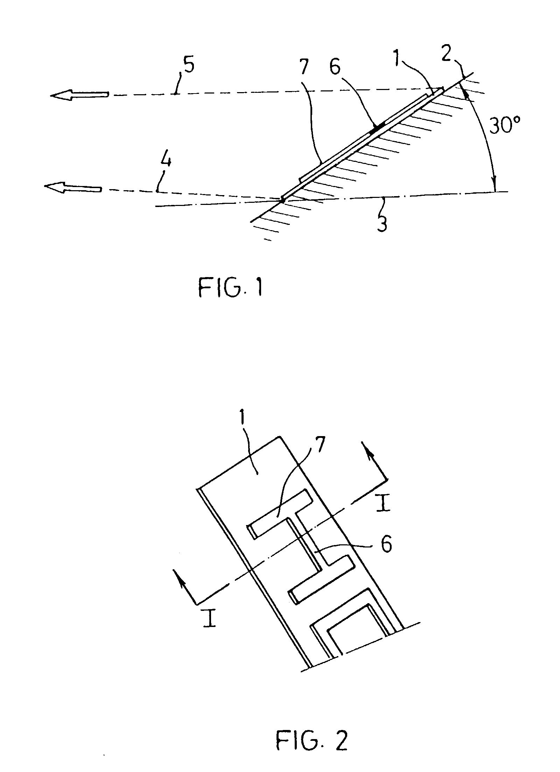

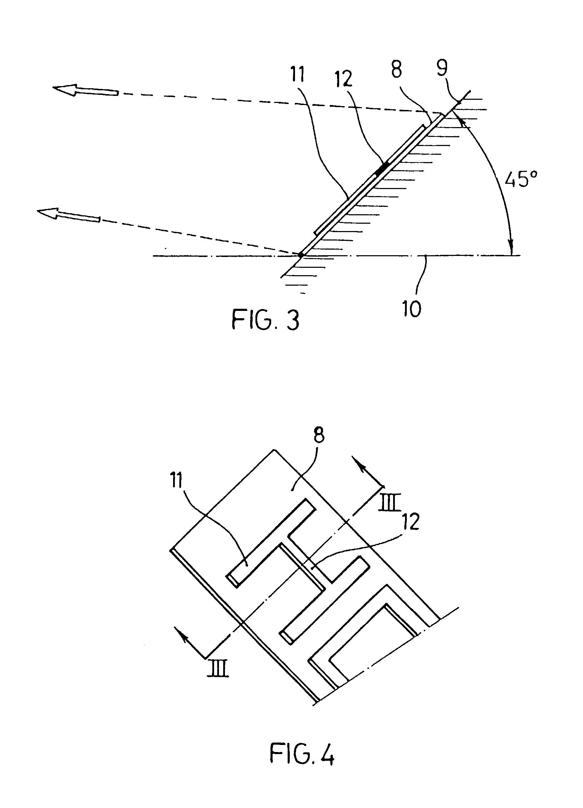

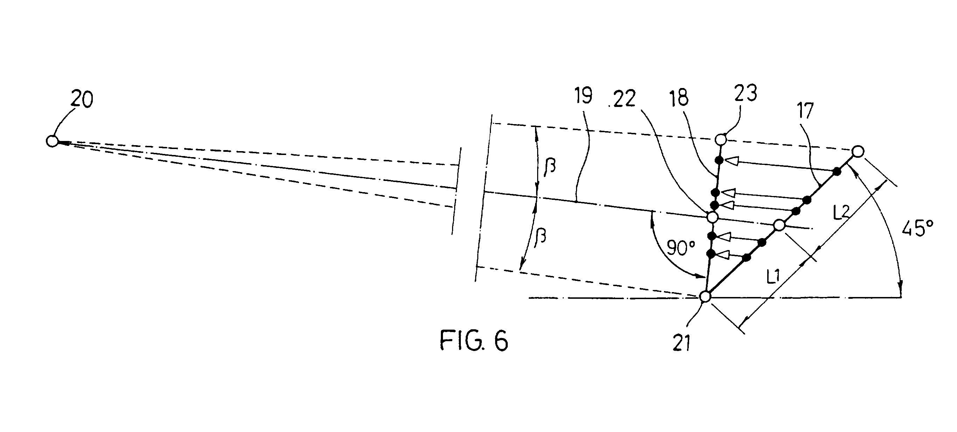

For the purpose of explanation, Figure 3 shows a view of an advertising panel 8 on a surface 9 which forms an angle of 45° with respect to the horizontal 10, it being observed in this case that the vertical sections 11, corresponding to the sections 7 in Figure 2, are seen with a greater length which corresponds more correctly to the actual advertising subject, while the horizontal sections 12, corresponding to Figure 6, are shown in the same way.

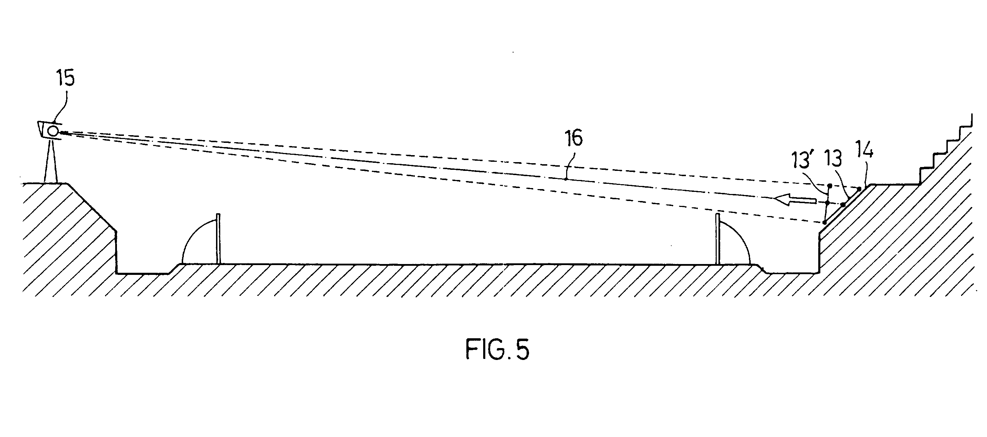

Figure 5 shows the arrangement of an advertising panel 13 on a conventional inclined surface 14, it being observed that the projector camera 15 is arranged in such a way that its optical axis 16 forms a predetermined angle with respect to the panel 13, the distorting effects of which have been explained on the basis of the preceding figures. The situation represented may be typical of that existing at a football ground in which the arrangement of the advertising panel 13 behind one of the goals in a very inclined or almost horizontal position may cause this type of visual distortion.

As will be understood, if the position of the advertising panel were that represented by the number 13', that is to say, perpendicular to the optical axis 16 of the eyepiece of the camera 15, the view of the said advertising subject could be practically perfect.

For this reason, as will be seen in Figure 6, for the arrangement of an advertising panel 17 forming a conventional angle with respect to the horizontal, which in the figure is shown as 45°, the method which is the subject of the present invention provides for transforming the corresponding actual advertising subject 17, taking into account its relation to the advertising panel 18, into a notional situation perpendicular to a selected axis, which may be the optical axis 19. For this, the method will comprise the plotting of an actual advertising subject corresponding to the panel 18 in theoretical position, all the individual segments of the said advertising subject afterwards passing beyond according to the angle formed between the panel 17 and the notional panel 18, to the panel 17, on which they will be depicted with the deformation resulting from the projection of the advertising subject situated on the notional panel 18 onto the panel 17. The said projection can be effected according to polar coordinates from the lens of the projector camera represented by the number 20, although for the purpose of greater simplicity, it may be effected by projection parallel to the optical axis 19, the error being much reduced in the case where the relationship between the total length of the advertising panel and the distance to the optical centre 20 has a much reduced value because the distance is relatively great. It will be understood, therefore, that any segment, such as those indicated by L₁ and L₂, should correspond to the corresponding segments on the notional panel 18 respectively comprised between the reference points 21 and 22 and between the reference points 22 and 23. In the elementary example shown, therefore, the segment 18 of an advertising subject perfectly observable by the spectators would be translated into a segment L₂ of correspondingly greater length, because it is a question of projection onto the inclined plane 17.

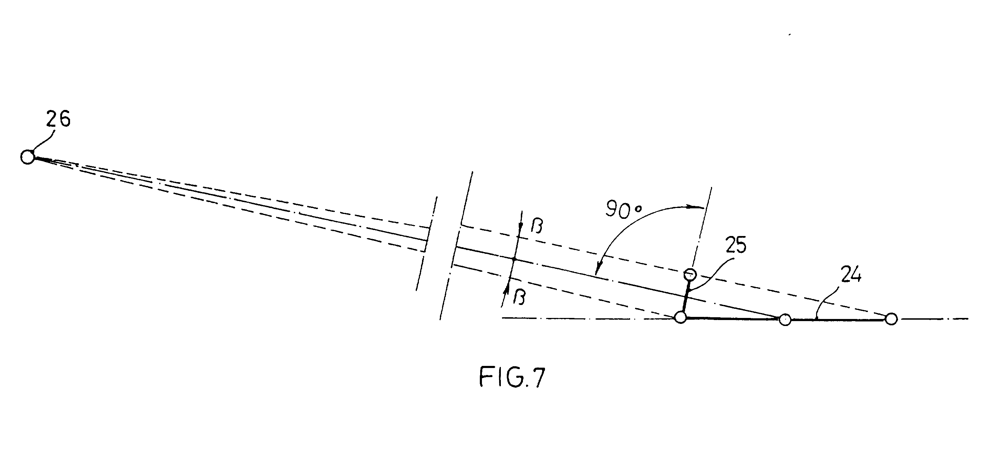

A particular case, which may have a very wide application, is that shown in Figure 7, in which the advertising panel 24 is arranged on a horizontal plane. The said situation may occur, for example, at a sports ground in the areas situated behind the goals. In these areas a certain flat surface is usually left free which is at present practically not exploited for advertising purposes, precisely because of the difficulty of duly capturing the messages arranged in a completely horizontal plane. By means of the application of the present invention it will be possible to remedy this drawback, making it possible to achieve correct transformation between a notional panel 24 and the actual advertising panel, taking into account the location of the lens 26 of the camera. In the arrangement mentioned there may be used, instead of actual supports for the advertising panel, simple fabrics carrying the advertising message spread horizontally on the ground and also, when required, the advertising subject could be represented directly on the horizontal surface mentioned, the application of the advertising subject being effected by painting or some other method, without the need for a specific canvas or support.

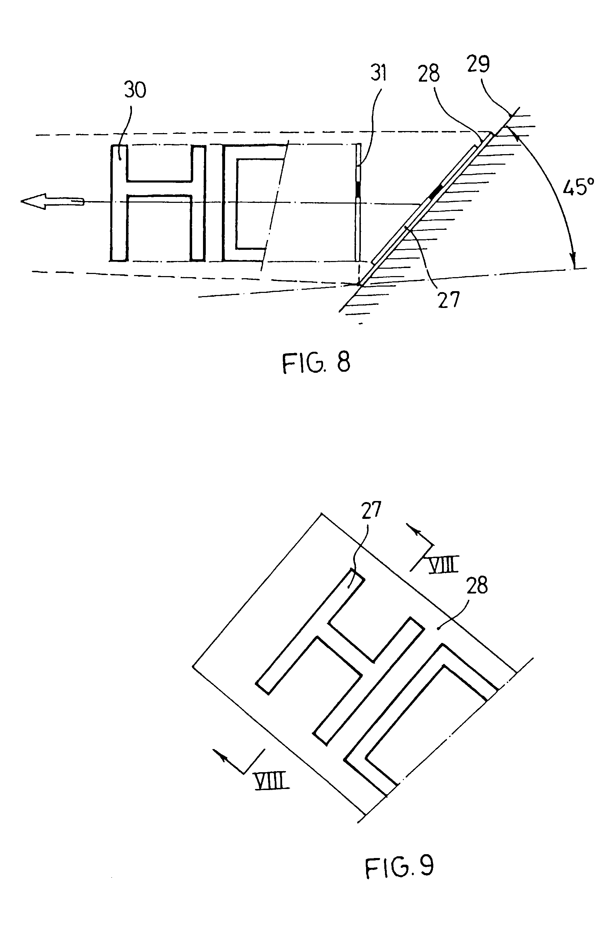

As will be observed in Figures 8 and 9, the basis of the method which is the subject of the present invention therefore lies in the fact that an advertising subject 27 which appears depicted in a distorted form on the panel 28, which will be arranged on a support 29 which forms a predetermined angle with the horizontal, for example, 45°, will be translated into an advertising subject 30 actually observed by the spectators, which corresponds to the projection onto the theoretical panel 31, which will be perfectly visible to the users.

The figures show arrangements of advertising panels in which all that was lacking was the correction according to one of the spatial angles, that is to say, that which corresponds to an axis of coordinates, although, as can be understood, a plane in space may be arranged with respect to the optical centre of the eyepiece in accordance with rotations made at three angles corresponding to the three coordinated axes. What has been indicated with respect to the correction according to an angle formed between the advertising panel and the optical axis could equally extend to the correction at three angles, the corrections of which would have to be effected in succession in order to achieve correspondence between a panel arranged perpendicularly to the selected axis and the actual panel arranged on the inclined surface according to a complex spatial position.

The computerization of the method will be effected on the basis of knowledge of the angle or angles formed by the area of support of the advertising panel and the optical axis, determining the positions of the different points on the advertising panel with suitable transformations by projections in successive planes, which in the simplest case, as shown previously, would occur on a single axis. It could also be effected by tabulation.

## Claims

1. Method for the remote visualization of advertising panels and the like from an image-capturing camera, in the case where the advertising panel is arranged at a certain angle with respect to the image-capturing optical axis, characterized in that it comprises measuring the angle which the plane receiving the advertising panel forms with the optical axis of the eyepiece of the image-capturing camera in the focused position of the panel, and plotting the individual segments of the advertising panel according to the angular transformation resulting from projecting the advertising panel onto a plane perpendicular to a selected axis.

2. Method for the remote visualization of advertising panels and the like from an image-capturing camera, according to Claim 1, characterized in that the projection of the advertising subject of the actual panel and that of a plane perpendicular to the selected axis is effected by polar coordinates with the centre in the eyepiece of the image-capturing camera.

3. Method for the remote visualization of advertising panels or the like from an image-capturing camera, according to Claim 1, characterized in that the projection of the advertising subject of the actual panel and that of a plane perpendicular to the selected axis is effected by projection parallel to the axis.

4. Method for the remote visualization of advertising panels and the like from an image-capturing camera, according to Claim 1, characterized in that the projection of the plane of the actual advertising panel onto the plane perpendicular to the selected axis is effected by successive projections on the three coordinated axes x, y, z.

5. Method for the remote visualization of advertising panels and the like from an image-capturing camera, according to the preceding claims, characterized in that the projection of the actual advertising panel is effected on a plane perpendicular to the optical axis, which aligns the lens of the image-capturing camera with the advertising panel.

6. Method for the remote visualization of advertising panels and the like from an image-capturing camera, according to Claim 1, characterized in that the projection of the actual advertising panel is effected on the vertical plane obtained by offsetting the actual advertising panel towards the vertical.
